# EUROPEAN PATENT APPLICATION

(11) **EP 4 842 079 A1**
(43) Date of publication of application: **18.11.2026**
(21) Application number: 25738312.5
(22) Date of filing: 02.01.2025
(51) Int. Cl.: H04W 52/02, H04W 24/08

(54) **CELL MEASUREMENT METHOD AND APPARATUS**

(30) Priority: 09.01.2024 CN 202410035454
(71) Applicant: Spreadtrum Semiconductor (Nanjing) Co., Ltd., Nanjing, Jiangsu 210000 (CN)
(72) Inventor: LEI, Zhenzhu, Nanjing, Jiangsu 210000 (CN); ZHOU, Huayu, Nanjing, Jiangsu 210000 (CN)
(74) Representative: Patentanwälte Ruff, Wilhelm, Beier, Dauster & Partner mbB
(86) International application number: PCT/CN2025/070291
(87) International publication number: WO 2025/148781

(57) **Abstract**

Embodiments of the present application relate to fields such as communications and radio resource management (RRM), and provide a cell measurement method and apparatus. The method comprises: receiving and measuring a reference signal of a serving cell by means of a low-power wake-up receiver to obtain first signal quality; and on the basis of the first signal quality and a signal quality threshold, determining that a primary receiver performs cell measurement or does not perform cell measurement. Therefore, the energy consumption of a terminal is reduced.

## Description

The present application claims priority to CN Patent Application No. 202410035454.6, entitled "CELL MEASUREMENT METHOD AND APPARATUS", and filed with the China National Intellectual Property Administration on January 9, 2024, the entirety of which is incorporated herein by reference.

### TECHNICAL FIELD

Embodiments of the present application relate to the technical fields of communication, radio resource management (RRM), and the like, and particularly to a method and an apparatus for cell measurement.

### BACKGROUND

In communication systems, a terminal exhibits mobility. To ensure service continuity and communication quality for the terminal, the terminal generally needs to perform RRM measurements to implement cell reselection or cell handover. Here, RRM measurements, also known as cell measurements, may comprise both serving cell measurements and neighbor cell measurements.

In related art, the terminal comprises a main receiver that needs to perform frequent RRM measurements, which prevents the main receiver from entering a deep sleep state to achieve energy saving of the terminal.

Therefore, how to reduce the RRM measurements performed by the main receiver to save energy of the terminal is a problem that needs to be addressed.

### SUMMARY

Embodiments of the present application provide a method and an apparatus for cell measurement for reducing energy consumption of a terminal.

In a first aspect, an embodiment of the present application provides a method for cell measurement applied at a terminal. The method comprises:
receiving and measuring a reference signal of a serving cell with a low power wake-up receiver to obtain a first signal quality;
determining to perform cell measurement or not to perform the cell measurement with a main receiver according to the first signal quality and a signal quality threshold.

In some embodiments, the method further comprises:
receiving the signal quality threshold sent by a device on network side.

In some embodiments, the cell measurement comprises one or more of the following:
measurement of the serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

In some embodiments, the first inter-frequency carrier is an inter-frequency carrier whose priority is higher than that of a frequency carrier of the serving cell among all inter-frequency carriers; wherein, the all inter-frequency carriers are the inter-frequency carriers configured for the terminal by the device on network side;
the second inter-frequency carrier is an inter-frequency carrier whose priority is lower than or equal to that of the frequency carrier of the serving cell among the all inter-frequency carriers;
the third inter-frequency carrier comprises each inter-frequency carrier of the all inter-frequency carriers.

In some embodiments, the signal quality threshold comprises a first threshold and/or a second threshold; and determining to perform the cell measurement with the main receiver according to the first signal quality and the signal quality threshold comprises:
determining to perform the intra-frequency neighbor cell measurement with the main receiver in response to the first signal quality being less than the first threshold; otherwise, determining to perform the inter-frequency neighbor cell measurement corresponding to the first inter-frequency carrier with the main receiver;
   and/or,
determining to perform the inter-frequency neighbor cell measurement corresponding to the third inter-frequency carrier with the main receiver in response to the first signal quality being less than the second threshold; otherwise, determining not to perform the inter-frequency neighbor cell measurement corresponding to the third inter-frequency carrier with the main receiver, or determining to perform the inter-frequency neighbor cell measurement corresponding to the first inter-frequency carrier with the main receiver.

In some embodiments, the signal quality threshold comprises a third threshold; and determining to perform the cell measurement with the main receiver according to the first signal quality and the signal quality threshold comprises:
determining to perform the measurement of the serving cell with the main receiver in response to the first signal quality being less than the third threshold; otherwise, determining to perform the inter-frequency neighbor cell measurement corresponding to the first inter-frequency carrier with the main receiver, or determining not to perform the inter-frequency neighbor cell measurement corresponding to the third inter-frequency carrier with the main receiver.

In some embodiments, in response to the first signal quality being less than the third threshold, the low power wake-up receiver is stopped from receiving the reference signal.

In some embodiments, in response to the first signal quality being less than the third threshold, the low power wake-up receiver is stopped from measuring the serving cell.

In some embodiments, the signal quality threshold comprises a fourth threshold; and receiving and measuring the reference signal of the serving cell with the low power wake-up receiver to obtain the first signal quality comprises:
receiving and measuring the reference signal of the serving cell with the main receiver to obtain a second signal quality;
receiving and measuring the reference signal of the serving cell with the low power wake-up receiver to obtain the first signal quality when the second signal quality is greater than or equal to the fourth threshold.

In a second aspect, an embodiment of the present application provides a method for cell measurement applied at a device on network side. The method comprises:
sending a signal quality threshold to a terminal, wherein the signal quality threshold is used by the terminal to determine whether or not to perform cell measurement with a main receiver.

In some embodiments, the cell measurement comprises one or more of the following:
measurement of a serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

In some embodiments, the first inter-frequency carrier is an inter-frequency carrier whose priority is higher than that of the frequency carrier of the serving cell among all inter-frequency carriers; wherein, the all inter-frequency carriers are all the inter-frequency carriers configured for the terminal by the device on network side;
the second inter-frequency carrier is an inter-frequency carrier whose priority is lower than or equal to that of the frequency carrier of the serving cell among the all inter-frequency carriers;
the third inter-frequency carrier comprises each inter-frequency carrier of the all inter-frequency carriers.

In some embodiments, the signal quality threshold comprises a first threshold and/or a second threshold;
the first threshold is used by the terminal to determine to perform the intra-frequency neighbor cell measurement with the main receiver, or to determine to perform the inter-frequency neighbor cell measurement corresponding to the first inter-frequency carrier with the main receiver;
   and/or,
the second threshold is used by the terminal to determine to perform the inter-frequency neighbor cell measurement corresponding to the third inter-frequency carrier with the main receiver, or to determine not to perform the inter-frequency neighbor cell measurement corresponding to the third inter-frequency carrier with the main receiver, or to determine to perform the inter-frequency neighbor cell measurement corresponding to the first inter-frequency carrier with the main receiver.

In some embodiments, the signal quality threshold comprises: a third threshold;
the third threshold is used by the terminal to determine to perform the measurement of the serving cell with the main receiver, or to determine to perform the inter-frequency neighbor cell measurement corresponding to the first inter-frequency carrier with the main receiver, or to determine not to perform the inter-frequency neighbor cell measurement corresponding to the third inter-frequency carrier with the main receiver.

In some embodiments, the signal quality threshold comprises a fourth threshold; the fourth threshold is used for the terminal to determine whether to receive and measure the reference signal of the serving cell with a low power wake-up receiver.

In a third aspect, an embodiment of the present application provides a communication apparatus. The communication apparatus comprises:
a first determining module configured for receiving and measuring a reference signal of a serving cell with a low power wake-up receiver to obtain a first signal quality;
a second determining module configured for determining to perform cell measurement or not to perform the cell measurement with a main receiver according to the first signal quality and a signal quality threshold.

In some embodiments, the apparatus further comprises:
a receiving module configured for receiving the signal quality threshold sent by a device on network side.

In some embodiments, the cell measurement comprises one or more of the following:
measurement of the serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

In some embodiments, the first inter-frequency carrier is an inter-frequency carrier whose priority is higher than that of the frequency carrier of the serving cell among all inter-frequency carriers; wherein, the all inter-frequency carriers are the inter-frequency carriers configured for the terminal by the device on network side;
the second inter-frequency carrier is an inter-frequency carrier whose priority is lower than or equal to that of the frequency carrier of the serving cell among the all inter-frequency carriers;
the third inter-frequency carrier comprises each inter-frequency carrier of the all inter-frequency carriers.

In some embodiments, the signal quality threshold comprises a first threshold and/or a second threshold; the second determining module is specifically configured for:
determining to perform the intra-frequency neighbor cell measurement with the main receiver in response to the first signal quality being less than the first threshold; otherwise, determining to perform the inter-frequency neighbor cell measurement corresponding to the first inter-frequency carrier with the main receiver;
   and/or,
determining to perform the inter-frequency neighbor cell measurement corresponding to the third inter-frequency carrier with the main receiver in response to the first signal quality being less than the second threshold; otherwise, determining not to perform the inter-frequency neighbor cell measurement corresponding to the third inter-frequency carrier with the main receiver, or determining to perform the inter-frequency neighbor cell measurement corresponding to the first inter-frequency carrier with the main receiver.

In some embodiments, the signal quality threshold comprises a third threshold; the second determining module is specifically configured for:
determining to perform the measurement of the serving cell with the main receiver in response to the first signal quality being less than the third threshold; otherwise, determining to perform the inter-frequency neighbor cell measurement corresponding to the first inter-frequency carrier with the main receiver, or determining not to perform the inter-frequency neighbor cell measurement corresponding to the third inter-frequency carrier with the main receiver.

In some embodiments, in response to the first signal quality being less than the third threshold, the low power wake-up receiver is stopped from receiving the reference signal.

In some embodiments, in response to the first signal quality being less than the third threshold, the low power wake-up receiver is stopped from measuring the serving cell.

In some embodiments, the signal quality threshold comprises a fourth threshold; the first determining module is specifically configured for:
receiving and measuring the reference signal of the serving cell with the main receiver to obtain a second signal quality;
receiving and measuring the reference signal of the serving cell with the low power wake-up receiver to obtain the first signal quality when the second signal quality is greater than or equal to the fourth threshold.

In a fourth aspect, an embodiment of the present application provides a communication apparatus. The communication apparatus comprises:
a sending module configured for sending a signal quality threshold to a terminal, wherein the signal quality threshold is used by the terminal to determine whether or not to perform cell measurement with a main receiver.

In some embodiments, the cell measurement comprises one or more of the following:
measurement of a serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

In some embodiments, the first inter-frequency carrier is an inter-frequency carrier whose priority is higher than that of the frequency carrier of the serving cell among all inter-frequency carriers; wherein, the all inter-frequency carriers are all the inter-frequency carriers configured for the terminal by a device on network side;
the second inter-frequency carrier is an inter-frequency carrier whose priority is lower than or equal to that of the frequency carrier of the serving cell among the all inter-frequency carriers;
the third inter-frequency carrier comprises each inter-frequency point of the all inter-frequency carriers.

In some embodiments, the signal quality threshold comprises a first threshold and/or a second threshold;
the first threshold is used by the terminal to determine to perform the intra-frequency neighbor cell measurement with the main receiver, or to determine to perform the inter-frequency neighbor cell measurement corresponding to the first inter-frequency carrier with the main receiver;
   and/or,
the second threshold is used by the terminal to determine to perform the inter-frequency neighbor cell measurement corresponding to the third inter-frequency carrier with the main receiver, or to determine not to perform the inter-frequency neighbor cell measurement corresponding to the third inter-frequency carrier with the main receiver, or to determine to perform the inter-frequency neighbor cell measurement corresponding to the first inter-frequency carrier with the main receiver.

In some embodiments, the signal quality threshold comprises: a third threshold;
the third threshold is used by the terminal to determine to perform the measurement of the serving cell with the main receiver, or to determine to perform the inter-frequency neighbor cell measurement corresponding to the first inter-frequency carrier with the main receiver, or to determine not to perform the inter-frequency neighbor cell measurement corresponding to the third inter-frequency carrier with the main receiver.

In some embodiments, the signal quality threshold comprises a fourth threshold; the fourth threshold is used for the terminal to determine whether to receive and measure the reference signal of the serving cell with a low power wake-up receiver.

In a fifth aspect, an embodiment of the present application provides a communication apparatus. The communication apparatus comprises: a memory and a processor;
wherein the memory stores computer-executable instructions; and
the processor executes the computer-executable instructions stored in the memory, causing the processor to perform a method of any of the first aspect.

In a sixth aspect, an embodiment of the present application provides a communication apparatus. The communication apparatus comprises: a memory and a processor;
wherein the memory stores computer-executable instructions; and
the processor executes the computer-executable instructions stored in the memory, causing the processor to perform a method of any of the second aspect.

In a seventh aspect, an embodiment of the present application provides a computer-readable storage medium, on which computer-executable instructions are stored. When the computer-executable instructions are executed by a processor, a method of any of the first aspect or a method of any of the second aspect is implemented.

In an eighth aspect, an embodiment of the present application provides a computer program product comprising a computer program, which, when executed by a processor, implements a method of any of the first aspect, or a method of any of the second aspect.

In a ninth aspect, an embodiment of the present application provides a chip on which a computer program is stored. When the computer program is executed by the chip, a method of any of the first aspect or a method of any of the second aspect is implemented.

In a tenth aspect, an embodiment of the present application provides a chip module on which a computer program is stored. When the computer program is executed by the chip module, a method of any of the first aspect or a method of any of the second aspect is implemented.

Embodiments of the present application provide a method and an apparatus for cell measurement. The method comprises: receiving and measuring a reference signal of a serving cell with a low power wake-up receiver to obtain a first signal quality; determining to perform cell measurement or not to perform the cell measurement with a main receiver according to the first signal quality and a signal quality threshold. In the above method, the low power wake-up receiver is used to receive and measure the reference signal of the serving cell to obtain the first signal quality, without the need for the main receiver to perform RRM measurement, which extends standby time of the main receiver and reduces the energy consumption of the terminal. Furthermore, determining to perform the cell measurement or not to perform the cell measurement with the main receiver according to the first signal quality and the signal quality threshold facilitates a reduction in the RRM measurements performed by the main receiver, further reducing the energy consumption of the terminal and extending standby time of the terminal.

### BRIEF DESCRIPTION OF THE DRAWINGS

FIG. 1 is a schematic flowchart of a method for cell measurement provided in an embodiment of the present application;
FIG. 2 is a schematic flowchart of a method for cell measurement provided in an embodiment of the present application;
FIG. 3 is a schematic structural diagram of a communication apparatus provided in an embodiment of the present application;
FIG. 4 is a schematic structural diagram of a communication apparatus provided in an embodiment of the present application;
FIG. 5 is a schematic structural diagram of a communication apparatus provided in an embodiment of the present application;
FIG. 6 is a schematic structural diagram of a communication apparatus provided in an embodiment of the present application.

### DETAILED DESCRIPTION

Here, exemplary embodiments will be described in detail, with examples illustrated in the accompanying drawings. When the following description refers to the drawings, unless otherwise indicated, the same numerals in different drawings represent the same or similar elements. The implementations described in the following exemplary embodiments do not represent all implementations consistent with the present application. Instead, they are merely examples of apparatuses and methods consistent with some aspects of the present application as detailed in the accompanying claims.

It should be noted that in the present application, the terms "including", "comprising", or any other variants thereof, are intended to convey a non-exclusive inclusion, such that processes, methods, articles, or apparatuses comprising a series of elements not only include those elements, but also include other elements not explicitly listed, or elements inherent to such processes, methods, articles, or apparatuses. Without further limitation, an element defined by the phrase "comprising a..." does not exclude the presence of additional identical elements in the processes, methods, articles, or apparatuses comprising this element.

In the present application, the term "comprising" and its variations may refer to non-exclusive inclusion; the term "or" and its variations may refer to "and/or". In the present application, terms such as "first", "second", etc. are used to distinguish similar objects, and are not necessarily used to describe a specific order or sequence. In the present application, "multiple" refers to two or more. The term "and/or" describes a relationship between related objects, indicating that three types of relationships may exist. For example, A and/or B may indicate: A alone, both A and B , or B alone. The character "/" indicates an "or" relation between the two objects before and after the character.

Firstly, professional terms involved in the present application are explained.

A frequency carrier is a number assigned to a fixed frequency.

An intra-frequency neighbor cell refers to a neighbor cell that shares a same frequency carrier with a serving cell.

An inter-frequency neighbor cell refers to a neighbor cell that has a different frequency carrier than the serving cell.

In related art, discussions are ongoing regarding relevant contents of low power wake-up signals.

The aforementioned relevant contents encompass the following two explanations:
1. When a main receiver of a terminal is in a deep sleep state, the network may wake up the main receiver of the terminal for related data transmission by sending a low power wake-up signal. That is, the terminal receives the low power wake-up signal by the low power receiver to determine whether the main receiver of the terminal needs to exit the sleep mode to enter an active state.
2. When the main receiver of the terminal is in a power off state or in a flight mode, the network may wake up the main receiver of the terminal for related data transmission by sending the low power wake-up signal. That is, the terminal receives the low power wake-up signal by the low power receiver to determine whether the main receiver of the terminal needs to be powered on or exit the flight mode to enter an active state. At this time, since a master circuit is in a power off state or in a flight mode and is not able to receive any signal, the terminal needs to use a separate receiving circuit to receive the wake-up signal.

In the above two explanations, in order to allow the main receiver of the terminal to remain in the deep sleep state or in the power off state or in the flight mode for a long time, the main receiver of the terminal is not allowed to perform frequent RRM measurements or is not allowed to perform RRM measurement for a long time.

In addition, in other related arts, the main receiver in the terminal performs all of the RRM measurements.

The main receiver in the terminal performing all the RRM measurements may lead to high energy consumption of the terminal, preventing the main receiver of the terminal from entering the deep sleep state or remaining in the deep sleep state or in the power off state or in the flight mode for a long time.

To reduce energy consumption of the terminal and to extend standby time of the terminal, the present application provides a method for cell measurement. In the method, a low power wake-up receiver is used to receive and measure a reference signal of a serving cell to obtain a first signal quality, and according to the first signal quality and a signal quality threshold, it is determined to perform cell measurement or not to perform the cell measurement with a main receiver. This method enables the low power wake-up receiver to perform a portion of RRM measurements, thereby reducing the RRM measurements performed by the main receiver, extending standby time of the main receiver of the terminal, and ultimately reducing the energy consumption of the terminal.The technical solutions of the present application and how they address the aforementioned technical problems will be described in detail below in specific embodiments. These specific embodiments may be combined, and for identical or similar concepts or processes, detailed description may be omitted in certain embodiments. Embodiments of the present application will be described below with reference to the accompanying drawings.

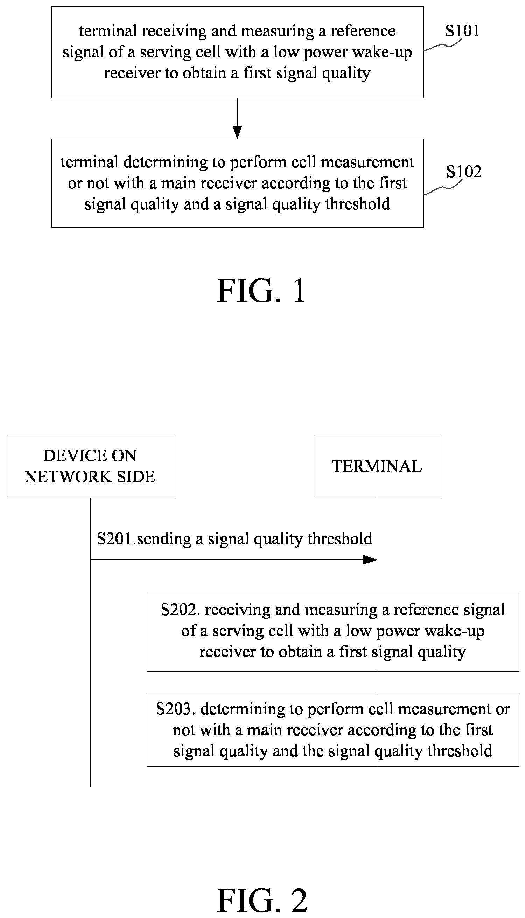

FIG. 1 is a schematic flowchart of a method for cell measurement provided in an embodiment of the present application. As shown in FIG. 1, the method comprises the following steps.

S101: A terminal receives and measures a reference signal of a serving cell with a low power wake-up receiver (LP-WUP) to obtain a first signal quality.

The reference signal of the serving cell is a reference signal sent by a device on network side corresponding to the serving cell.

The first signal quality may also be referred to as a serving cell measurement result, or a measurement result of the serving cell, etc.

Optionally, the first signal quality may comprise a first Reference Signal Receiving Power (RSRP) value and/or a first Reference Signal Receiving Quality (RSRQ) value.

S102: The terminal determines to perform cell measurement or not to perform the cell measurement with a main receiver (Master Receiver, MR) according to the first signal quality and a signal quality threshold.

Optionally, when S102 is performed, the method provided by the present application may further comprise: receiving the signal quality threshold configured by the device on network side, and storing the signal quality threshold.

Optionally, the signal quality threshold may be carried in system information.

In the method for cell measurement provided in the embodiment of the present application, the low power wake-up receiver is used to receive and measure the reference signal of the serving cell to obtain the first signal quality, without the need for the main receiver to perform RRM measurements, thereby reducing the energy consumption of the terminal and extending standby time of the terminal. Furthermore, determining to perform cell measurement or not to perform the cell measurement with the main receiver according to the first signal quality and the signal quality threshold facilitates a reduction in the RRM measurements performed by the main receiver, further reducing the energy consumption of the terminal and extending standby time of the terminal.

In the present application, the cell measurement comprises one or more of the following:
measurement of a serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

The intra-frequency neighbor cell measurement refers to receiving and measuring a reference signal of an intra-frequency neighbor cell of the serving cell. The intra-frequency neighbor cell of the serving cell is neighboring to the serving cell and shares a same frequency carrier with the serving cell.

The inter-frequency neighbor cell measurement refers to receiving and measuring a reference signal of an inter-frequency neighbor cell of the serving cell. The inter-frequency neighbor cell of the serving cell is neighboring to the serving cell and has a different frequency carrier from the serving cell.

In the present application, the first inter-frequency carrier refers to an inter-frequency carrier whose priority is higher than that of the frequency carrier of the serving cell among all inter-frequency carriers; the second inter-frequency carrier refers to an inter-frequency carrier whose priority is lower than or equal to that of the frequency carrier of the serving cell among the all inter-frequency carriers; and the third inter-frequency carrier comprises each inter-frequency carrier of the all inter-frequency carriers. The all inter-frequency carriers are all the inter-frequency carrier(s) configured by the device on network side for the terminal.

In some embodiments, the signal quality threshold comprises a fourth threshold. Receiving and measuring the reference signal of the serving cell with the low power wake-up receiver to obtain the first signal quality comprises: receiving and measuring the reference signal of the serving cell with the main receiver to obtain a second signal quality; receiving and measuring the reference signal of the serving cell with the low power wake-up receiver to obtain the first signal quality when the second signal quality is greater than or equal to the fourth threshold.

The second signal quality comprises a second RSRP value and/or a second RSRQ value.

Optionally, the fourth threshold comprises: a fourth RSRP threshold and/or a fourth RSRQ threshold.

For example, when the second signal quality is the second RSRP value, the fourth threshold may be the fourth RSRP threshold.

For example, when the second signal quality is the second RSRQ value, the fourth threshold may be the fourth RSRQ threshold.

In the embodiment of the present application, S102 may be implemented in the following two approaches (Approach 1 and Approach 2).

Approach 1: The signal quality threshold comprises a first threshold and/or a second threshold. S102 specifically comprises:
determining to perform the intra-frequency neighbor cell measurement with the main receiver in response to the first signal quality being less than (or less than or equal to) the first threshold; otherwise, determining not to perform the intra-frequency neighbor cell measurement with the main receiver;
   and/or,
determining to perform the inter-frequency neighbor cell measurement corresponding to the third inter-frequency carrier with the main receiver in response to the first signal quality being less than (or, less than or equal to) the second threshold; otherwise, determining not to perform the inter-frequency neighbor cell measurement corresponding to the third inter-frequency carrier with the main receiver, or determining to perform the inter-frequency neighbor cell measurement corresponding to the first inter-frequency carrier with the main receiver.

Optionally, when the first signal quality is greater than or equal to (or, greater than) the first threshold, it is determined not to perform the intra-frequency neighbor cell measurement with the main receiver, but to perform the inter-frequency neighbor cell measurement corresponding to the first inter-frequency carrier with the main receiver.

Optionally, the first threshold comprises: a first RSRP threshold and/or a first RSRQ threshold.

Optionally, the second threshold comprises: a second RSRP threshold and/or a second RSRQ threshold.

For example, when the first signal quality is the first RSRP value, the first threshold may be the first RSRP threshold, and the second threshold may be the second RSRP threshold.

For example, when the first signal quality is the first RSRQ value, the first threshold may be the first RSRQ threshold, and the second threshold may be the second RSRQ threshold.

For example, when the first signal quality comprises the first RSRP value and the first RSRQ value, the first threshold may comprise the first RSRQ threshold and the first RSRQ threshold, and the second threshold may comprise the second RSRP threshold and the second RSRQ threshold.

Optionally, when the terminal is in a first state, the low power wake-up receiver is utilized to receive and measure the reference signal of the serving cell to obtain the first signal quality. When the first signal quality is less than (or, less than or equal to) the first threshold, it is determined to perform the intra-frequency neighbor cell measurement with the main receiver. Otherwise, it is determined not to perform the intra-frequency neighbor cell measurement with the main receiver. And/or, when the first signal quality is less than (or, less than or equal to) the second threshold, it is determined to perform the inter-frequency neighbor cell measurement corresponding to the third inter-frequency carrier with the main receiver. Otherwise, it is determined to perform the inter-frequency neighbor cell measurement corresponding to first inter-frequency carrier with the main receiver.

Optionally, when the terminal is in a second state, the low power wake-up receiver is utilized to receive and measure the reference signal of the serving cell to obtain the first signal quality. When the first signal quality is less than (or, less than or equal to) the first threshold, it is determined to perform the intra-frequency neighbor cell measurement with the main receiver. Otherwise, it is determined not to perform the intra-frequency neighbor cell measurement with the main receiver. And/or, when the first signal quality is less than (or, less than or equal to) the second threshold, it is determined to perform the inter-frequency neighbor cell measurement corresponding to the third inter-frequency carrier with the main receiver. Otherwise, it is determined not to perform the inter-frequency neighbor cell measurement corresponding to the third inter-frequency carrier with the main receiver.

When the terminal is in the first state, the main receiver is in a deep sleep state and does not perform any data transmission or RRM measurement with non-high priority.

When the terminal is in the second state, the main receiver is in the deep sleep state and does not perform any data transmission or any RRM measurement.

In Approach 1, when the first signal quality is less than (or, less than or equal to) the first threshold, it is determined to perform the intra-frequency neighbor cell measurement with the main receiver; otherwise, it is determined not to perform the intra-frequency neighbor cell measurement with the main receiver. This approach only determines to perform the intra-frequency neighbor cell measurement with the main receiver when the signal quality of the serving cell is poor, and only determines not to perform the intra-frequency neighbor cell measurement with the main receiver when the signal quality of the serving cell is good. This may prevent the main receiver from performing all the RRM measurements, thereby reducing energy consumption of the terminal and extending standby time of the terminal.

In Approach 1, when the first signal quality is less than (or, less than or equal to) the second threshold, it is determined to perform the inter-frequency neighbor cell measurement corresponding to the third inter-frequency carrier with the main receiver ; otherwise, it is determined not to perform the inter-frequency neighbor cell measurement corresponding to the third inter-frequency carrier (i.e. performs all the RRM measurements) with the main receiver, or it is determined to perform the inter-frequency neighbor cell measurement corresponding to the first inter-frequency carrier (i.e., performs RRM measurements with high priorities) with the main receiver. This approach determines to perform the inter-frequency neighbor cell measurement corresponding to all inter-frequency carriers with the main receiver when the signal quality of the serving cell is poor, and the determines not to perform all the RRM measurements or to perform RRM measurements with high priorities with the main receiver when the signal quality of the serving cell is good, preventing the main receiver from performing all the RRM measurements, reducing energy consumption of the terminal and extending the standby time of the terminal.

Approach 2: The signal quality threshold comprises: a third threshold. S102 specifically comprises:
determining to perform the measurement of the serving cell with the main receiver when the first signal quality is less than (or, less than or equal to) the third threshold; otherwise, determining to perform the inter-frequency neighbor cell measurement corresponding to the first inter-frequency carrier with the main receiver, or determining not to perform the inter-frequency neighbor cell measurement corresponding to the third inter-frequency carrier with the main receiver.

Optionally, when the first signal quality is less than (or, less than or equal to) the third threshold, it may further be determined to perform the inter-frequency neighbor cell measurement corresponding to the first inter-frequency carrier and the measurement of the serving cell with the main receiver.

Optionally, the third threshold comprises: a third RSRP threshold and/or a third RSRQ threshold.

For example, when the first signal quality is the first RSRP value, the third threshold may be the third RSRP threshold.

For example, when the first signal quality is the first RSRQ value, the third threshold may be the third RSRQ threshold.

Optionally, when the first signal quality is less than (or, less than or equal to) the third threshold, the low power wake-up receiver is stopped from receiving the reference signal.

Optionally, when the first signal quality is less than (or, less than or equal to) the third threshold, the low power wake-up receiver is stopped from measuring the reference signal.

In the present application, the measurement of the serving cell refers to the measurement on the reference signal of the serving cell.

Optionally, when the terminal is in the first state, the low power wake-up receiver is utilized to receive and measure the reference signal of the serving cell to obtain the first signal quality. When the first signal quality is less than (or, less than or equal to) the third threshold, it is determined to perform the measurement of the serving cell with the main receiver. Otherwise, it is determined to perform the inter-frequency neighbor cell measurement corresponding to the first inter-frequency carrier with the main receiver.

Optionally, when the terminal is in the second state, the low power wake-up receiver is utilized to receive and measure the reference signal of the serving cell to obtain the first signal quality. When the first signal quality is less than (or, less than or equal to) the third threshold, it is determined to perform the measurement of the serving cell with the main receiver. Otherwise, it is determined not to perform the inter-frequency neighbor cell measurement corresponding to the third inter-frequency carrier with the main receiver.

Optionally, in the above-mentioned Approaches 1 and 2, when the device on network side does not configure a fourth threshold, the third threshold may be used to determine whether the terminal is in the first state. Specifically, the main receiver is used to receive and measure the reference signal of the serving cell to obtain a second signal quality and it is determined that the terminal is in the first state when the second signal quality is greater than or equal to the third threshold.

Optionally, in the above-mentioned Approaches 1 and 2, when the device on network side configures a fourth threshold, the fourth threshold may be used to determine whether the terminal is in the first state. Specifically, the main receiver is used to receive and measure the reference signal of the serving cell to obtain a second signal quality and it is determined that the terminal is in the first state when the second signal quality is greater than or equal to the fourth threshold.

In Approach 2, it is determined to perform the measurement of the serving cell with the main receiver when the first signal quality is less than (or, less than or equal to) the third threshold; otherwise, it is determined to perform the inter-frequency neighbor cell measurement corresponding to the first inter-frequency carrier with the main receiver, or it is determined not to perform the inter-frequency neighbor cell measurement corresponding to the third inter-frequency carrier with the main receiver. This approach determines to perform the RRM measurement of the serving cell with the main receiver when the signal quality is poor, and determines to perform RRM measurements with high priorities with the main receiver or not to perform any RRM measurement with the main receiver when the signal quality of the serving cell is good, preventing the main receiver from performing all the RRM measurements, thereby reducing energy consumption of the terminal and extending standby time of the terminal.

FIG. 2 is a schematic flowchart of a method for cell measurement provided in an embodiment of the present application. As shown in FIG. 2, the method comprises the following steps.

S201: A device on network side sends a signal quality threshold to a terminal.

In some embodiments, the signal quality threshold comprises a first threshold and/or a second threshold.

The first threshold is used by the terminal to determine to perform intra-frequency neighbor cell measurement with a main receiver, or to determine to perform inter-frequency neighbor cell measurement corresponding to a first inter-frequency carrier with the main receiver.

The second threshold is used by the terminal to determine to perform inter-frequency neighbor cell measurement corresponding to a third inter-frequency carrier with the main receiver, or to determine not to perform the inter-frequency neighbor cell measurement corresponding to the third inter-frequency carrier with the main receiver, or to determine to perform the inter-frequency neighbor cell measurement corresponding to the first inter-frequency carrier with the main receiver.

In some embodiments, the signal quality threshold further comprises: a third threshold. The third threshold is used by the terminal to determine to perform measurement of a serving cell with the main receiver, or to determine to perform the inter-frequency neighbor cell measurement corresponding to the first inter-frequency carrier with the main receiver, or to determine not to perform the inter-frequency neighbor cell measurement corresponding to the third inter-frequency carrier with the main receiver.

In some embodiments, the signal quality threshold comprises: a fourth threshold. The fourth threshold is used by the terminal to determine whether to receive and measure a reference signal of the serving cell with a low power wake-up receiver.

Optionally, the device on network side may configure the first threshold, the second threshold, the third threshold, and the fourth threshold for the terminal through a single system information, or through multiple system information. The multiple system information may be two, three, or four system information and the like.

S202: The terminal receives and measures the reference signal of the serving cell with the low power wake-up receiver to obtain a first signal quality.

S203: The terminal determines to perform the cell measurement or not to perform the cell measurement with the main receiver according to the first signal quality and a signal quality threshold.

Specifically, S202 to S203 may be performed in a same way as for S101 to S102, and the process of performing S202 to S203 will not be repeated here.

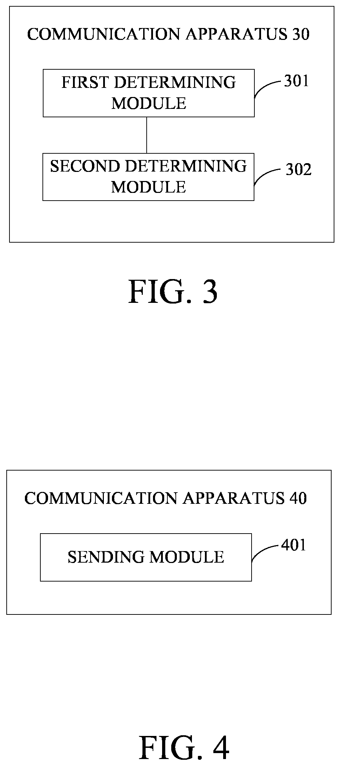

FIG. 3 is a schematic structural diagram of a communication apparatus provided in an embodiment of the present application. The communication apparatus 30 shown in FIG. 3 is applied in a terminal, and the communication apparatus 30 comprises:
a first determining module 301 configured for receiving and measuring a reference signal of a serving cell with a low power wake-up receiver to obtain a first signal quality;
a second determining module 302 configured for determining to perform cell measurement or not to perform the cell measurement with a main receiver according to the first signal quality and a signal quality threshold.

The communication apparatus 30 provided in the embodiment of the present application may perform the method steps performed by the terminal in the above method embodiments, and its implementation principle and beneficial effects are similar, which will not be described in detail here.

In some embodiments, the communication apparatus 30 further comprises:
a receiving module configured for receiving the signal quality threshold sent by a device on network side.

The receiving module may comprise the low power wake-up receiver and/or the main receiver.

In some embodiments, the cell measurement comprises one or more of the following:
measurement of the serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

In some embodiments, the first inter-frequency carrier is an inter-frequency carrier whose priority is higher than that of the frequency carrier of the serving cell among all inter-frequency carriers; wherein, the all inter-frequency carriers are the inter-frequency carriers configured for the terminal by a device on network side;
the second inter-frequency carrier is an inter-frequency carrier whose priority is lower than or equal to that of the frequency carrier of the serving cell among the all inter-frequency carriers;
the third inter-frequency carrier comprises each inter-frequency carrier of the all inter-frequency carriers.

In some embodiments, the signal quality threshold comprises a first threshold and/or a second threshold; and the second determining module 302 is specifically configured for:
determining to perform the intra-frequency neighbor cell measurement with the main receiver in response to the first signal quality being less than the first threshold; otherwise, determining to perform the inter-frequency neighbor cell measurement corresponding to the first inter-frequency carrier with the main receiver;
   and/or,
determining to perform the inter-frequency neighbor cell measurement corresponding to the third inter-frequency carrier with the main receiver in response to the first signal quality being less than the second threshold; otherwise, determining not to perform the inter-frequency neighbor cell measurement corresponding to the third inter-frequency carrier with the main receiver, or determining to perform the inter-frequency neighbor cell measurement corresponding to the first inter-frequency carrier with the main receiver.

In some embodiments, the signal quality threshold comprises a third threshold; and the second determining module 302 is specifically configured for:
determining to perform the measurement of the serving cell with the main receiver in response to the first signal quality being less than the third threshold; otherwise, determining to perform the inter-frequency neighbor cell measurement corresponding to the first inter-frequency carrier with the main receiver, or determining not to perform the inter-frequency neighbor cell measurement corresponding to the third inter-frequency carrier with the main receiver.

In some embodiments, when the first signal quality is less than the third threshold, the low power wake-up receiver is stopped from receiving the reference signal.

In some embodiments, when the first signal quality is less than the third threshold, the low power wake-up receiver is stopped from measuring the serving cell.

In some embodiments, the signal quality threshold comprises a fourth threshold; and the first determining module 301 is specifically configured for:
receiving and measuring the reference signal of the serving cell with the main receiver to obtain a second signal quality;
receiving and measuring the reference signal of the serving cell with the low power wake-up receiver to obtain the first signal quality, when the second signal quality is greater than or equal to the fourth threshold.

The communication apparatus 30 provided in the embodiment of the present application may perform the method steps performed by the terminal in the above method embodiments, and its implementation principle and beneficial effects are similar, which will not be described in detail here.

FIG. 4 is a schematic structural diagram of a communication apparatus provided in an embodiment of the present application. The communication apparatus 40 shown in FIG. 4 is applied in a device on network side, and the communication apparatus 40 comprises:
a sending module 401 configured for sending a signal quality threshold to a terminal, wherein the signal quality threshold is used by the terminal to determine whether or not to perform cell measurement with a main receiver.

The communication apparatus 40 provided in the embodiment of the present application may perform the method steps performed by the device on network side in the above method embodiments, and its implementation principle and beneficial effects are similar, which will not be described in detail here.

In some embodiments, the cell measurement comprises one or more of the following:
measurement of a serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

In some embodiments, the first inter-frequency carrier is an inter-frequency carrier whose priority is higher than that of the frequency carrier of the serving cell among all inter-frequency carriers; wherein, the all inter-frequency carriers are all the inter-frequency carriers configured for the terminal by the device on network side;
the second inter-frequency carrier is an inter-frequency carrier whose priority is lower than or equal to that of the frequency carrier of the serving cell among the all inter-frequency carriers;
the third inter-frequency carrier comprises each inter-frequency carrier of the all inter-frequency carriers.

In some embodiments, the signal quality threshold comprises a first threshold and/or a second threshold.

The first threshold is used by the terminal to determine to perform the intra-frequency neighbor cell measurement with the main receiver, or to determine to perform the inter-frequency neighbor cell measurement corresponding to the first inter-frequency carrier with the main receiver;
and/or,
the second threshold is used by the terminal to determine to perform the inter-frequency neighbor cell measurement corresponding to the third inter-frequency carrier with the main receiver, or to determine not to perform the inter-frequency neighbor cell measurement corresponding to the third inter-frequency carrier with the main receiver, or to determine to perform the inter-frequency neighbor cell measurement corresponding to the first inter-frequency carrier with the main receiver.

In some embodiments, the signal quality threshold comprises: a third threshold.

The third threshold is used by the terminal to determine to perform the measurement of the serving cell with the main receiver, or determine to perform the inter-frequency neighbor cell measurement corresponding to the first inter-frequency carrier with the main receiver, or to determine not to perform the inter-frequency neighbor cell measurement corresponding to the third inter-frequency carrier with the main receiver.

In some embodiments, the signal quality threshold comprises: a fourth threshold.

The fourth threshold is used by the terminal to determine whether to receive and measure the reference signal of the serving cell with the low power wake-up receiver.

The communication apparatus 40 provided in the embodiment of the present application may perform the method steps performed by the device on network side in the above method embodiments, and its implementation principle and beneficial effects are similar, which will not be described in detail here.

In the several embodiments provided in the present application, it should be understood that the disclosed apparatuses and methods may be implemented in other ways. For example, the apparatus embodiments described above are merely illustrative; for example, the division of modules is only a logical function division, and in actual implementations, there may be other division ways; for example, multiple modules or components may be combined or integrated into another system, or some features may be ignored or not performed. In addition, the coupling or direct coupling or communication connection between each other shown or discussed may be indirect coupling or communication connection through some interfaces, means, or modules, and may be electrical, mechanical, or other forms.

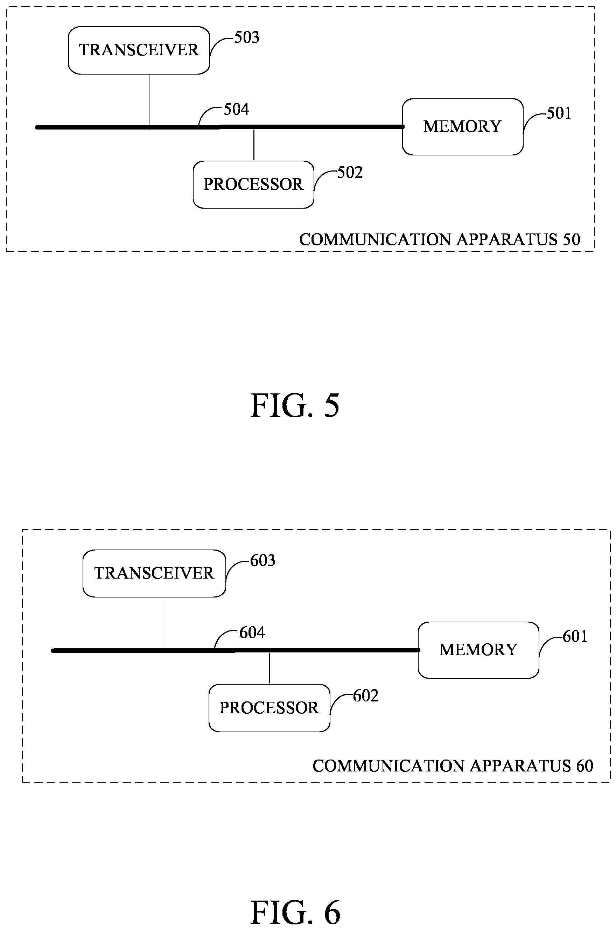

FIG. 5 is a schematic structural diagram of a communication apparatus provided in an embodiment of the present application. The communication apparatus 50 shown in FIG. 5 is applied in a terminal, and the communication apparatus 50 comprises a memory 501, a processor 502, and a transceiver 503.

The memory 501 is configured for storing program instructions.

The processor 502 is configured for executing the program instructions stored in the memory, so as to enable an electronic device to perform the aforementioned methods.

The transceiver 503 may comprise: a transmitter and/or a receiver. The transmitter may also be referred to as a sender, an emitter, a sending port, a sending interface, etc, and the receiver may also be referred to as an acceptor, a receiving port, a receiving interface, etc. Illustratively, the memory 501, the processor 502, and the transceiver 503 are interconnected via a bus 504.

FIG. 6 is a schematic structural diagram of a communication apparatus provided in an embodiment of the present application. The communication apparatus 60 shown in FIG. 6 is applied in a device on network side, and the communication apparatus 60 comprises: a memory 601, a processor 602, and a transceiver 603.

The memory 601 is configured to store program instructions.

The processor 602 is configured for executing the program instructions stored in the memory, so as to enable an electronic device to perform the aforementioned methods.

The transceiver 603 may comprise: a transmitter and/or a receiver. The transmitter may also be referred to as a sender, an emitter, a sending port, a sending interface, etc, and the receiver may also be referred to as an acceptor, a receiving port, a receiving interface, etc. Illustratively, the memory 601, the processor 602, and the transceiver 603 are interconnected via a bus 604.

The processor may be a central processing unit (CPU), a general-purpose processor, a digital signal processor (DSP), an application-specific integrated circuit (ASIC), a field programmable gate array (FPGA), or another programmable logic device, transistor logic device, hardware component, or any combination thereof. It may implement or execute various exemplary logical blocks, modules, and circuits described in conjunction with the disclosure of the present application. The processor may also be a combination of computing functions, e.g. a combination of one or more microprocessors, a combination of DSP and microprocessors, etc.

The bus mentioned in the present application may be an Industry Standard Architecture (ISA) bus, a Peripheral Component Interconnect (PCI) bus, or an Extended Industry Standard Architecture (EISA) bus, etc. The bus may be classified as an address bus, a data bus, a control bus, etc. For ease of illustration, the bus in the accompanying drawings of the present application is not limited to only one bus or one type of bus.

An embodiment of the present application provides a computer-readable storage medium having computer-readable instructions stored therein, and the computer-readable instructions, when executed by a processor, implement the methods provided by in the above method embodiments.

An embodiment of the present application further provides a computer program product comprising computer programs that, when executed by a processor, implement the methods described in the above method embodiments.

An embodiment of the present application further provides a chip on which a computer program is stored. When the computer program is executed by the chip, the methods shown in the above method embodiments are implemented.

An embodiment of the present application further provides a chip module on which a computer program is stored. When the computer program is executed by the chip module, the methods shown in the above method embodiments are implemented.

These computer program instructions may also be stored in a computer-readable memory that may direct a computer or another programmable data processing device to work in a specific way, so that the instructions stored in the computer-readable memory produce an article of manufacture comprising an instruction device, which implements the functions specified in one or more processes of the flowcharts and/or one or more blocks of the block diagrams.

These computer program instructions may also be loaded onto a computer or another programmable data processing device, enabling a series of operational steps to be performed on the computer or the other programmable data processing device to create computer-implemented processing, and thus, the instructions executed on the computer or the other programmable data processing device provide steps for implementing the functions specified in one or more processes of the flowcharts and/or one or more blocks of the block diagrams.

The terminal device mentioned in the present application may be a wireless terminal, which may refer to a device that provides voice and/or data connectivity to users, a handheld device with wireless connection capability, or another processing device connected to a wireless modem. The wireless terminal may communicate with at least one core network via a Radio Access Network (RAN). The wireless terminal may be a mobile terminal, such as a mobile phone (also known as a "cellular" phone) and a computer equipped with a mobile terminal, for example, a portable, pocket-sized, handheld, built-in, or vehicle-mounted mobile device, which exchanges voice and/or data with the wireless access network. The wireless terminal may also be referred to as a Subscriber Unit, a Subscriber Station, a Mobile Station, a Remote Station, an Access Point, a Remote Terminal, an Access Terminal, a User Terminal, a User Equipment (UE), or a User Agent, which is not limited in this context.

Obviously, those skilled in the art may make various modifications and variations to the embodiments of the present application without departing from the spirit and scope of the present application. In this way, the present application also intends to encompass these modifications and variations when these modifications and variations of the embodiments of the present application fall within the scope of the claims and their equivalents of the present application.

## Claims

1. A method for cell measurement, **characterized in that** the method is applied at a terminal and comprises:
receiving and measuring a reference signal of a serving cell with a low power wake-up receiver to obtain a first signal quality;
determining to perform cell measurement or not to perform the cell measurement with a main receiver according to the first signal quality and a signal quality threshold.

2. The method according to claim 1, **characterized in that**, the method further comprises:
receiving the signal quality threshold sent by a device on network side.

3. The method according to claim 1 or 2, **characterized in that**, the cell measurement comprises one or more of the following:
measurement of the serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

4. The method according to claim 3, **characterized in that**, the first inter-frequency carrier is an inter-frequency carrier whose priority is higher than that of the frequency carrier of the serving cell among all inter-frequency carriers; wherein, the all inter-frequency carriers are inter-frequency carriers configured for the terminal by the device on network side;
the second inter-frequency carrier is an inter-frequency carrier whose priority is lower than or equal to that of the frequency carrier of the serving cell among the all inter-frequency carriers;
the third inter-frequency carrier comprises each inter-frequency carrier of the all inter-frequency carriers.

5. The method according to claim 3 or 4, **characterized in that**, the signal quality threshold comprises a first threshold and/or a second threshold; and determining to perform the cell measurement with the main receiver according to the first signal quality and the signal quality threshold comprises:
determining to perform the intra-frequency neighbor cell measurement with the main receiver in response to the first signal quality being less than the first threshold; otherwise, determining to perform the inter-frequency neighbor cell measurement corresponding to the first inter-frequency carrier with the main receiver;
and/or,
determining to perform the inter-frequency neighbor cell measurement corresponding to the third inter-frequency carrier with the main receiver in response to the first signal quality being less than the second threshold; otherwise, determining not to perform the inter-frequency neighbor cell measurement corresponding to the third inter-frequency carrier with the main receiver, or determining to perform the inter-frequency neighbor cell measurement corresponding to the first inter-frequency carrier with the main receiver.

6. The method according to claim 3 or 4, **characterized in that**, the signal quality threshold comprises a third threshold; and determining to perform the cell measurement with the main receiver according to the first signal quality and the signal quality threshold comprises:
determining to perform the measurement of the serving cell with the main receiver in response to the first signal quality being less than the third threshold; otherwise, determining to perform the inter-frequency neighbor cell measurement corresponding to the first inter-frequency carrier with the main receiver, or determining not to perform the inter-frequency neighbor cell measurement corresponding to the third inter-frequency carrier with the main receiver.

7. The method according to claim 6, **characterized in that**, the method comprises preventing the low power wake-up receiver from receiving the reference signal in response to the first signal quality being less than the third threshold.

8. The method according to claim 6, **characterized in that**, the method comprises preventing the low power wake-up receiver from measuring the serving cell in response to the first signal quality being less than the third threshold.

9. The method according to any one of claims 1 to 8, **characterized in that**, the signal quality threshold comprises a fourth threshold; and, receiving and measuring the reference signal of the serving cell with the low power wake-up receiver to obtain the first signal quality comprises:
receiving and measuring the reference signal of the serving cell with the main receiver to obtain a second signal quality;
receiving and measuring the reference signal of the serving cell with the low power wake-up receiver to obtain the first signal quality when the second signal quality is greater than or equal to the fourth threshold.

10. A method for cell measurement, **characterized in that** the method is applied at a device on network side and comprises:
sending a signal quality threshold to a terminal, wherein the signal quality threshold is used by the terminal to determine whether or not to perform cell measurement with a main receiver.

11. The method according to claim 10, **characterized in that**, the cell measurement comprises one or more of the following:
measurement of a serving cell;
intra-frequency neighbor cell measurement;
inter-frequency neighbor cell measurement corresponding to a first inter-frequency carrier;
inter-frequency neighbor cell measurement corresponding to a second inter-frequency carrier;
inter-frequency neighbor cell measurement corresponding to a third inter-frequency carrier.

12. The method according to claim 11, **characterized in that**, the first inter-frequency carrier is an inter-frequency carrier whose priority is higher than that of the frequency carrier of the serving cell among all inter-frequency carriers; wherein the all inter-frequency carriers are all inter-frequency carriers configured for the terminal by the device on network side;
the second inter-frequency carrier is an inter-frequency carrier whose priority is lower than or equal to that of the frequency carrier of the serving cell among the all inter-frequency carriers;
the third inter-frequency carriers comprises each inter-frequency carrier of the all inter-frequency carriers.

13. The method according to claim 12, **characterized in that**, the signal quality threshold comprises a first threshold and/or a second threshold;
the first threshold is used by the terminal to determine to perform the intra-frequency neighbor cell measurement with the main receiver, or to determine to perform the inter-frequency neighbor cell measurement corresponding to the first inter-frequency carrier with the main receiver;
and/or,
the second threshold is used by the terminal to determine to perform the inter-frequency neighbor cell measurement corresponding to the third inter-frequency carrier with the main receiver, or to determine not to perform the inter-frequency neighbor cell measurement corresponding to the third inter-frequency carrier with the main receiver, or to determine to perform the inter-frequency neighbor cell measurement corresponding to the first inter-frequency carrier with the main receiver.

14. The method according to claim 12, **characterized in that**, the signal quality threshold comprises: a third threshold;
the third threshold is used by the terminal to determine to perform the measurement of the serving cell with the main receiver, or to determine to perform the inter-frequency neighbor cell measurement corresponding to the first inter-frequency carrier with the main receiver, or to determine not to perform the inter-frequency neighbor cell measurement corresponding to the third inter-frequency carrier with the main receiver.

15. The method according to any one of claims 11 to 14, **characterized in that**, the signal quality threshold comprises: a fourth threshold;
the fourth threshold is used by the terminal to determine whether to receive and measure the reference signal of the serving cell with a low power wake-up receiver.

16. A communication apparatus, **characterized in that**, the communication apparatus comprises:
a first determining module configured for receiving and measuring a reference signal of a serving cell with a low power wake-up receiver to obtain a first signal quality;
a second determining module configured for determining to perform cell measurement or not to perform the cell measurement with a main receiver according to the first signal quality and a signal quality threshold.

17. A communication apparatus, **characterized in that**, the communication apparatus comprises:
a sending module configured for sending a signal quality threshold to a terminal, wherein the signal quality threshold is used by the terminal to determine whether or not to perform cell measurement with a main receiver.

18. A communication apparatus, **characterized in that**, the communication apparatus comprises: a memory and a processor;
the memory storing computer-executable instructions;
the processor executing the computer-executable instructions stored in the memory to cause the processor to perform the method according to any one of claims 1 to 9.

19. A communication apparatus, **characterized in that**, the communication apparatus comprises: a memory and a processor;
the memory storing computer-executable instructions;
the processor executing the computer-executable instructions stored in the memory to cause the processor to perform the method according to any one of claims 10 to 15.

20. A computer-readable storage medium, **characterized in that**, the computer-readable storage medium stores computer executable instructions therein which, when executed by a processor, implement the method according to any one of claims 1 to 9, or the method according to any one of claims 10 to 15.

21. A computer program product, **characterized in that**, the computer program product comprises a computer program which, when executed by a computer, implements the method according to any one of claims 1 to 9, or the method according to any one of claims 10 to 15.
